(19) Europäisches Patentamt
European Patent Office
Office européen des brevets

(11) **EP 3 085 955 A1**

(12) **EUROPEAN PATENT APPLICATION**

(43) Date of publication:
**26.10.2016 Bulletin 2016/43**

(51) Int Cl.:
***F03D 7/02*** *(2006.01)*   ***F03D 13/00*** *(2016.01)*

(21) Application number: **15164259.2**

(22) Date of filing: **20.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Siemens Aktiengesellschaft 80333 München (DE)**

(72) Inventors:
- **Esbensen, Thomas 7400 Herning (DK)**
- **Kragh, Knud Abildgaard 2830 Virum (DK)**
- **Madsen, Lars 6700 Esbjerg (DK)**

(54) **METHOD TO CONTROL THE OPERATION OF A WIND TURBINE**

(57)    Wind-related values as well as these operating parameters of the wind turbine are measured: electrical output power, parameters of the rotating blade-system, accelerations and thrusts, which are impacting on wind turbine components. The measured values are used to generate respective time-based statistics. The statistics are used to estimate at least one of these loads: tower bending moment, blade bending moment and/or tower yawing moment. The estimated loads are compared with load threshold values, which are pre-determined for the given type of the wind turbine. The operation of the wind turbine is controlled in a way that, taking into account the load estimations, respective loads are reduced.

FIG 3

EP 3 085 955 A1

**Description**

The invention relates to a method to control the operation of a wind turbine.

Methods to control the operation of a wind turbine are well known. Some of the controls address the reduction of loads of wind turbine components, i.e. they address the reduction of loads, which are acting on the blades of the rotor of the wind turbine.

It is known to obtain a load reduction using a constant adjustment of the pitch angle. This adjustment is normally done in dependency of the electrical output power of the wind turbine, which is an indicator for the wind speed as well.

It is known to reduce loads, which are acting on wind turbine components, in a high wind situation by reducing the number of rotations per minute (abbreviated with "RPM") and by decreasing the output power in dependency of the increasing wind speed.

It is even known to reduce the rotational speed of the blades and to reduce the output power of the wind turbine based on loads, which are estimated.

These controls are quite easy and work straight forward. They are mainly based on measurements of a single parameter like the wind speed - thus the controls are neither sophisticated nor adaptive to site-specific conditions of the wind turbine or to operation-specific conditions of the wind turbine.

The load reduction controls as known do not take into account an optimized annual energy production (AEP) as well as the control is activated or deactivated in a more mindless manner, taking only into account actual loads.

It is therefore the aim of the invention to provide a sophisticated, adaptive and improved method to control the operation of a wind turbine in view to loads.

This aim is solved by the features of claim 1. Preferred configurations of the invention are addressed by the dependent claims.

The method invented controls the operation of a wind turbine. Wind-related values as well as these operating parameters of the wind turbine are measured: electrical output power, parameters of the rotating blade-system, and accelerations and thrusts, which are impacting on wind turbine components. The measured values are used to generate respective time-based statistics. The statistics are used to estimate at least one of these loads: tower bending moment, blade bending moment and/or tower yawing moment. The estimated loads are compared with load threshold values, which are pre-determined for the given type of the wind turbine. The operation of the wind turbine is controlled in a way that, taking into account the load estimations, respective loads are reduced.

Summarized the method invented addresses the operation of the wind turbine in respect to loads, which are experienced by the wind turbine, and in respect to the operating conditions of the wind turbine. The method invented controls the operation of the wind turbine in a way that the loads, acting on the wind turbine, are alleviated or at least reduced.

Described in more detail the control method as invented is based on specific values of the wind turbine and its ambience, i.e.:

- the produced electrical power,
- the pitch angle of the rotating blades,
- the number of rotations per minute (rpm) of the blades or the equivalent rotational speed of the blades,
- the characteristics of the wind (like the wind speed, turbulences, air temperature, air moisture, etc),
- the accelerations experienced by the nacelle, and/or
- the thrusts, which are experienced by respective components (i.e. the blades, the nacelle, the shaft, etc.) of the wind turbine.

The specific values are used to generate one or more of the statistics given below, which are subsequently used for estimations:

- n-second statistic of power,
- n-second statistic of pitch,
- n-second statistic of rpm,
- n-second statistic of the wind as an estimation,
- n-second statistic of the turbulence as an estimation,
- n-second statistic of a processed nacelle side-to-side acceleration,
- n-second statistic of a processed nacelle forward-backward acceleration,
- n-second statistic of a processed nacelle resulting acceleration, and/or
- n-second statistic of thrust estimates.

These statistics could cover a time period of several seconds as well as longer periods of time (please note that the statistics do not aim for the whole lifetime of the wind turbine).

The statistics are used to estimate a number of loads (i.e. bending moments) or at least a sub-set of them, i.e.:

- a first maximum absolute tower bending moment (in reference to the bottom end of the tower and in reference to a forward-backward movement of the tower as experienced in direction to the incoming wind),
- a second maximum absolute tower bending moment (in reference to the bottom end of the tower and in reference to a side-to-side movement of the tower as experienced perpendicular in direction to the incoming wind),

- a maximum absolute yawing moment in reference to the top of the tower,
- a minimum blade root flap bending moment,
- a maximum absolute blade root edge bending moment,
- a cyclic tower bottom forward-backward fatigue bending moment,
- a cyclic tower bottom side-to-side fatigue bending moment, and/or
- a cyclic blade root flap fatigue bending moment.

The resulting loads of the estimators are compared with respective limiting values, which are pre-determined for each given wind turbine type.

Depending on the configuration of the control method, all or a subset of the following control handles are used to alleviate the loads. The load alleviation is based on a predetermined strategy:

- a limiting pitch angle value (known as opti-pitch) is adjusted, and/or
- the rotational speed of the rotating blades is curtailed, and/or
- the electrical output power is curtailed, and/or
- a gain of a side-to-side tower damper is increased, and/or
- a saturation limit of the side-to-side tower damper is increased.

The load estimators can be controlled in a way that the targeted loads are addressed as individual target load, as a group of target loads or altogether.

The load estimators will preferably estimate n-second load statistics instead of load time series. The load estimates will be updated every n seconds, yielding to a minimum update period of n seconds.

Several of the listed loads are correlated thus the number of load estimators can be reduced. In a preferred configuration the respective inputs of the estimators are grouped thus a resulting number of four estimators are used to address these loads respectively:

A first estimator addresses these loads:

- the first maximum absolute tower bending moment (bottom, forward-backward),
- the minimum blade root flap bending moment, and
- the maximum blade root edge bending moment.

A second estimator addresses this load:

- the second maximum absolute tower bending moment.

A third estimator addresses this load:

- the maximum absolute yawing moment in reference to the top of the tower.

A fourth estimator addresses these loads:

- the cyclic tower bottom forward-backward fatigue bending moment,
- the cyclic tower bottom side-to-side fatigue bending moment, and
- the cyclic blade root flap fatigue bending moment.

The general structure of a respective load estimator is described by this formula:

$$\tilde{L}_i = c_{i,1} s_{i,1}^k + c_{i,2} s_{i,2}^k + c_{i,3} s_{i,3}^k$$

With:

$\tilde{L}_i$          as load estimate corresponding to a load group $i$,

$c_{i,1}$ - $c_{i,3}$     as load model coefficients of the load model $i$,

$s_{i,1}$ - $s_{i,3}$     as input signals of the load model $i$, and

$k$           as weigthing factor, which can be either 1 or 2.

The model coefficients are found from aero-elastic simulations such that a highest possible correlation is achieved between the load estimate of each group and the loads within the group.

Thus, the four load estimators yield to generic measures of the load level within each load group and cannot be translated to a specific load. The loads estimates are qualitative indicators of the load levels.

The method invented can be configured to alleviate all or only a subset of the above listed main loads.

The method invented is based on estimations, which are in turn based on well known wind turbine parameters and wind measurements. Thus the method invented is reliable and does not need to measure loads by sensors, which are often subjected to interferences.

The method invented takes care for a load reduction, which can be done in dependency of a guaranteed annual energy production (AEP) as well.

The method invented is not only active in "high load situations" (like storm or high wind), it is even active during the normal operation of the wind turbine. The control is thus aiming for a trade-off between loads, live-time of the wind turbine (and its components as well) and optimized energy output.

The method invented aims for a wind turbine control, which is applicable to manage extreme loads (i.e. occurring around a rated wind speed or at high wind speeds) and which is as well applicable to manage fatigue loads in view to a planned lifetime of the wind turbine.

The method invented consists of a control functionality, which applies modifications to the operational state of the wind turbine, while the control functionality is based on a number of estimated loads.

The method invented adjusts the operational state of the wind turbine preferably, when the wind turbine operates in a high load or under harsh environmental conditions. Hence the effect on the annual energy production (AEP) is minimized.

The method invented is preferably based on online load and actual estimations. Thus the method reacts to load levels, which are higher than anticipated for a given site or for a given wind turbine design. Thus the overall safety against structural failure is increased.

The method invented even allows an efficient wind turbine control at sites with wind conditions, which are outside of design conditions.

The control-method as invented allows a less conservative wind turbine design because certain loads can be alleviated over the lifetime of the wind turbine.

The invention is described in more details by help of figures.

The figures show preferred embodiments of the invention and shall not limit the scope of the claimed idea.

FIG 1 shows the main structure for the method invented,

FIG 2 shows the architecture of the load estimaton,

FIG 3 shows controller actions, based on load estimations.

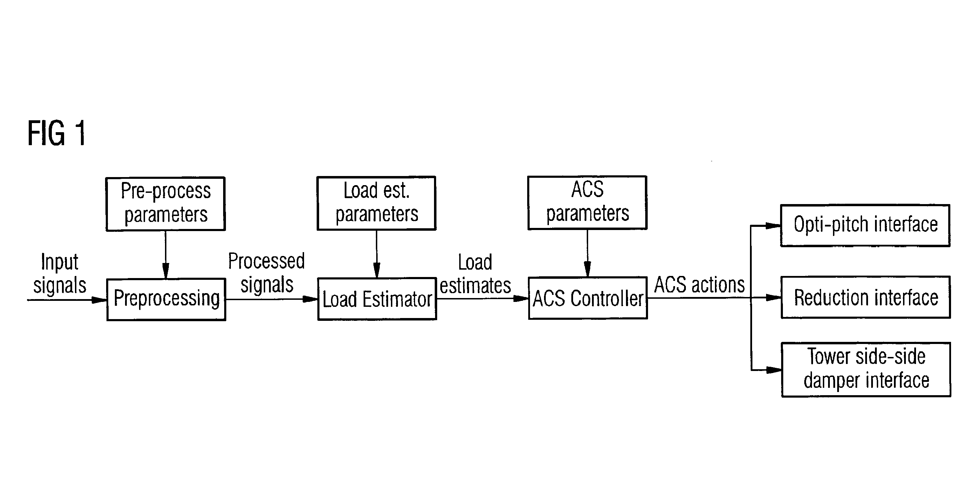

**FIG 1** shows the main structure for the method invented. A set of "input signals" are fed into a unit "preprocessing".

The input signals might comprise measured values of the wind turbine and its ambience - i.e. the produced electrical power, the pitch angle of the rotating blades, the number of rotations (rpm) of the blades or the equivalent rotational speed of the blades, the characteristics of the wind (like the wind speed, turbulences, air temperature, air moisture, etc), accelerations experienced by the nacelle, and/or thrusts, which are experienced by respective components (i.e. the blades, the nacelle, the shaft, etc.) of the wind turbine.

The unit "preprocessing" uses so called pre-process parameters. By help of the parameters the "input signals" are filtered and averaged.

A set of "processed signals" are handed over to the unit "load estimator", which is used to estimate respective loads as described above.

The unit load estimator is even supplied with so called "load est. parameters". By help of the parameters the "processed signals" are weighted by coefficients.

A set of "load estimates" are handed over to the unit "ACS controller", which control different capabilities or handles to alleviate the loads. The loads are alleviated by one or more of these possibilities ("control handles"):

- a limiting pitch angle value (known as opti-pitch) is adjusted, and/or
- the rotational speed of the rotating blades is curtailed, and/or
- the electrical output power is curtailed, and/or
- a gain of a side-to-side tower damper is increased, and/or
- a saturation limit of the side-to-side tower damper is increased.

The unit "ACS controller" is even supplied with so called "ACS parameters". By help of the parameters the scheduling of the controller actions is done as described above.

Resulting controller actions, titled as "ACS actions" are handed over to respective units, i.e. an adjusted pitch angle value is handed over to the unit "opti-pitch interface" for further processing.

Accordingly respective curtailment commands are handed over to the unit "reduction Interface" for further processing and respective damper commands are handed over to the unit "tower side-side damper interface" for further processing.

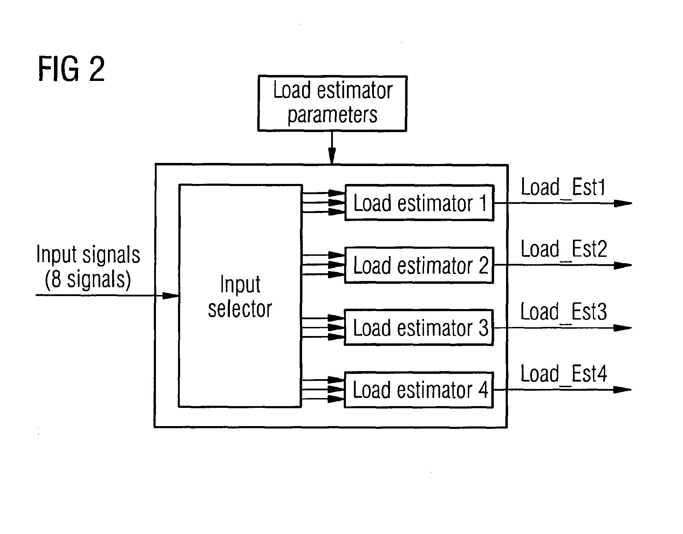

FIG 2 shows the architecture of the load estimation, which comprises four load estimators as described above in more detail.

The applied grouping of loads is justified through the correlation between the target loads.

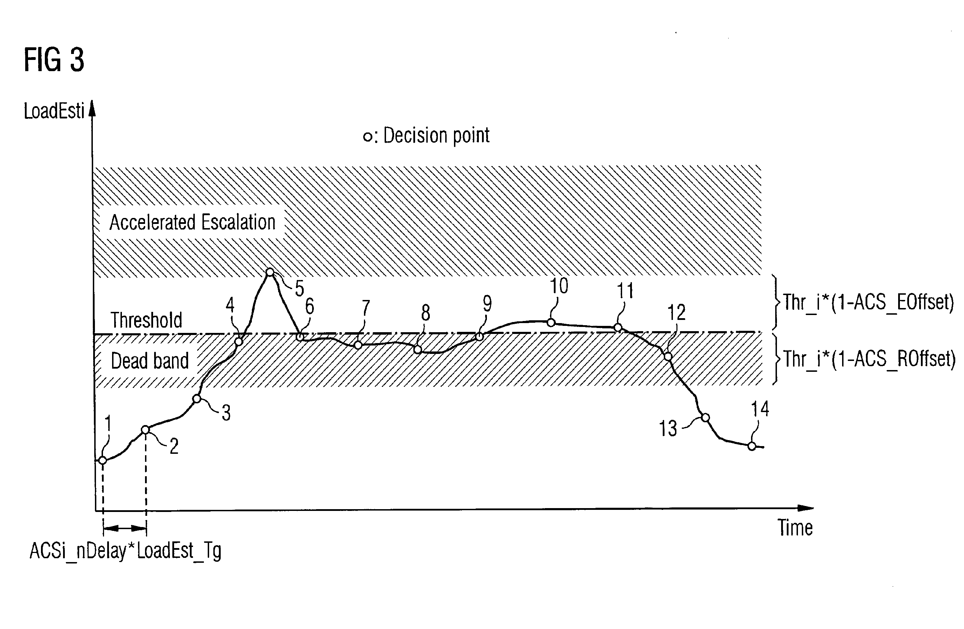

FIG 3 shows controller actions, based on load estimations.

The vertical axis of the plot shows values of a load estimation "LoadEsti", while the horizontal axis shows time-values "Time".

Three load estimations result in values, which are below a so called "Dead band". These values are marked by so called "Decision points" 1, 2 and 3.

As the aligned estimation values of the "Decision points" 1, 2 and 3 are below the given "Dead band" the wind turbine controller continues with the operation of the wind turbine. In principle the wind turbine can be operated as close as possible to the wind to increase the power output of the wind turbine while staying below a given load threshold value. Thus - as shown by the chronology of the "Decision points" 1 up to 3 - the loads as estimated are increasing in a controlled manner.

If the load estimations are getting closer to the threshold value - as shown by the "Decision point" 4 - the operation of the wind turbine is controlled in a way that the estimated loads stay below the given threshold value.

If the load estimations are stepping over the threshold value - as shown by the "Decision point" 5 - in a rapid manner (thus with a quite high respective gradient) the control of the operation of the wind turbine is changed. The control now aims for a load reduction but in an accelerated manner to reach allowed loads as soon as possible.

The respective section in the figure FIG 3 is designated as "Accelerated Escalation".

The accelerated load reduction can be done by performing one or more actions, i.e. limiting the pitch angle value, curtailing of the rotational speed, curtailing of the output power, etc., as described above.

If the load estimations are reaching the dead band again - as shown by "Decision point" 6, the accelerated load reduction actions can be reduced again in influencing the loads.

The operation of the wind turbine is now controlled in a way that the estimated loads stay within the given "Dead band" and thus below the "Threshold", as indicated by the "Decision points 6 up to 9.

In principle the wind turbine can be operated as close as possible to the wind to increase the power output of the wind turbine while staying below the given load threshold value.

If the load estimations are stepping over the threshold value - as shown by the "Decision point" 10 - but in a more slow manner (thus with a quite low respective gradient) the control of the operation of the wind turbine is changed again. The control now aims for a smooth load reduction to reduce the loads stepwise until the estimated loads are again reaching the "Dead band". This is shown by the decision points 10 up to 12.

If the load estimations are leaving the "Dead band" while increasing their distance towards the "Threshold" as shown by the "Decisions points" 13 and 14, the load-based control could be stopped - the load is no longer deemed to endanger the wind turbine.

For the load estimations a corresponding operation scheduling strategy is applied.

As indicated above the operation scheduling strategy of a load estimator is defined as an applied step in using respective load handles when the load estimate exceeds the predefined threshold.

Thus the load estimator can trigger all, a subset or only a single control handle - i.e. for a load estimator the following operation scheduling strategy could be applied:

| Adjust opti-pitch value: | enabled |
|---|---|

(continued)

| Adjust Speed: | reduce by 10% |
|---|---|
| Adjust Power: | reduce by 10% |
| Adjust Tower side-side damper: | no |
| Adjust Tower side-side damper saturation: | no |

This strategy could shift the operation of the wind turbine to a more conservative opti-pitch curve and decrease the speed and power reference by 10%. The tower side-side damper is left unchanged if an escalation is requested. The above strategy could be associated with a load estimator that represents the tower forward-backward loads.
For tower bottom side-side loads a relevant strategy could be defined like this:

| Adjust opti-pitch value: | no |
|---|---|
| Adjust Speed: | no |
| Adjust Power: | no |
| Adjust Tower side-side damper: | increase by 50% |
| Adjust Tower side-side damper saturation: | increase by 100 % |

If the controller requests an accelerated action, the defined steps are multiplied with a predefined gain to decrease the load level in a fast manner.
The threshold as discussed above can be set for each load estimator respectively. The threshold is used as tuning parameters and will determine how aggressive an operation scheduling will be applied.

## Claims

1.  Method to control the operation of a wind turbine,

    - wherein wind-related values as well as these operating parameters of the wind turbine are measured: electrical output power, parameters of the rotating blade-system, accelerations and thrusts, which are impacting on wind turbine components,
    - wherein the measured values are used to generate respective time-based statistics,
    - wherein the statistics are used to estimate at least one of these loads: tower bending moment, blade bending moment and/or tower yawing moment,
    - wherein the estimated loads are compared with load threshold values, which are pre-determined for the given type of the wind turbine, and
    - wherein the operation of the wind turbine is controlled in a way that, taking into account the load estimations, respective loads are reduced.

2.  Method according to claim 1, wherein the operating parameters comprise at least one of these measurements:

    • a produced electrical output power of the wind turbine,
    • a pitch angle of the rotating blades of the wind turbine,
    • a number of rotations per minute (rpm) of the blades or the rotational speed of the blades of the wind turbine,
    • accelerations experienced by the nacelle, and/or
    • thrusts, which are experienced by respective components of the wind turbine.

3.  Method according to claim 1, wherein the wind-related values comprise characteristics of the wind like wind speed, wind turbulences, the air temperature and/or the air moisture.

4.  Method according to one of the preceding claims, wherein the respective time-based statistics comprises at least one of these:

• a n-second statistic of power,
• a n-second statistic of pitch,
• a n-second statistic of rpm,
• a n-second statistic of the wind as an estimation,
• a n-second statistic of the turbulence as an estimation,
• a n-second statistic of a processed nacelle side-to-side acceleration,
• a n-second statistic of a processed nacelle forward-backward acceleration,
• a n-second statistic of a processed nacelle resulting acceleration, and/or
• a n-second statistic of thrust estimates.

5. Method according to claim 4, wherein the statistics cover a time period of several seconds up to a time period of several hours.

6. Method according to one of the preceding claims, wherein the statistics are used to estimate at least one or a subset of these loads:

• a first maximum absolute tower bending moment, while the moment is referred to the bottom end of the tower and is referred to a forward-backward movement of the tower as experienced in direction to the incoming wind,
• a second maximum absolute tower bending moment, while the moment is referred to the bottom end of the tower and is referred to a side-to-side movement of the tower as experienced perpendicular to the direction of the incoming wind,
• a maximum absolute yawing moment in reference to the top of the tower,
• a minimum blade root flap bending moment,
• a maximum absolute blade root edge bending moment,
• a cyclic tower bottom forward-backward fatigue bending moment,
• a cyclic tower bottom side-to-side fatigue bending moment, and/or
• a cyclic blade root flap fatigue bending moment.

7. Method according to one of the preceding claims, wherein all of the following control handles or a subset of the following control handles are used to reduce the loads:

• a limiting pitch angle value is adjusted, and/or
• the rotational speed of the rotating blades is curtailed, and/or
• the electrical output power of the wind turbine is curtailed, and/or
• a gain of a side-to-side tower damper is increased, and/or
• a saturation limit of the side-to-side tower damper is increased.

8. Method according to one of the preceding claims, wherein the load estimators are grouped for the load-estimation:

- wherein a first estimator is used to estimate these loads:

• the first maximum absolute tower bending moment,
• the minimum blade root flap bending moment, and
• the maximum blade root edge bending moment, while

- wherein a second estimator is used to estimate the second maximum absolute tower bending moment, while
- wherein a third estimator is used to estimate the maximum absolute yawing moment in reference to the top of the tower, and
- wherein a fourth estimator is used to estimate these loads:

• the cyclic tower bottom forward-backward fatigue bending moment,
• the cyclic tower bottom side-to-side fatigue bending moment, and
• the cyclic blade root flap fatigue bending moment.

9. Method according to claim 8, wherein the respective load estimator is described by this formula:

$$\tilde{L}_i = c_{i,1} s_{i,1}^k + c_{i,2} s_{i,2}^k + c_{i,3} s_{i,3}^k$$

with:

$\tilde{L}_i$ as load estimate corresponding to load group $i$,
$c_{i,1}$ - $c_{i,3}$ as load model coefficients of load model $i$,
$s_{i,1}$- $s_{i,3}$ as input signals of the load model $i$, and
$k$ as weigthing factor, $1 <= k <= 2$.

and wherein the model coefficients are determined by aero-elastic simulations such that a highest possible correlation is achieved between the load estimate of each group and the loads within the group.

# FIG 1

EP 3 085 955 A1

# FIG 2

Load estimator parameters

Input signals (8 signals)

Input selector

Load estimator 1 → Load_Est1

Load estimator 2 → Load_Est2

Load estimator 3 → Load_Est3

Load estimator 4 → Load_Est4

# FIG 3

LoadEsti

o: Decision point

Accelerated Escalation

Threshold

Dead band

$Thr\_i*(1-ACS\_EOffset)$

$Thr\_i*(1-ACS\_ROffset)$

Time

$ACSi\_nDelay*LoadEst\_Tg$

EP 3 085 955 A1

Europäisches
Patentamt

European
Patent Office

Office européen
des brevets

# EUROPEAN SEARCH REPORT

Application Number

EP 15 16 4259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/288855 A1 (DESHPANDE AMEET [US]) 25 September 2014 (2014-09-25) * abstract * * paragraph [0007] - paragraph [0008] * * paragraph [0029] - paragraph [0036] * * paragraph [0043]; figure 6 * | 1-9 | INV. F03D7/02 F03D11/00 |
| X | US 2011/018271 A1 (KARIKOMI KAI [JP] ET AL) 27 January 2011 (2011-01-27) * abstract * * paragraph [0007] - paragraph [0012] * * paragraph [0017] * * paragraph [0031] - paragraph [0035] * * paragraph [0054] - paragraph [0062] * * paragraph [0068]; figures 2,3 * | 1-9 | |
| A | DE 10 2007 027849 A1 (REPOWER SYSTEMS AG [DE]) 18 December 2008 (2008-12-18) * abstract * * paragraph [0014] - paragraph [0015] * * paragraph [0023] - paragraph [0024]; figure 3 * | 1-8 | TECHNICAL FIELDS SEARCHED (IPC) F03D |

The present search report has been drawn up for all claims

| Place of search | Date of completion of the search | Examiner |
|---|---|---|
| The Hague | 27 October 2015 | Westermayer, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 4259

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2015

| Patent document cited in search report | Publication date | Patent family member(s) | | Publication date |
|---|---|---|---|---|
| US 2014288855 A1 | 25-09-2014 | US | 2014288855 A1 | 25-09-2014 |
|  |  | WO | 2014149364 A1 | 25-09-2014 |
| US 2011018271 A1 | 27-01-2011 | AU | 2009285308 A1 | 04-03-2010 |
|  |  | CA | 2719238 A1 | 04-03-2010 |
|  |  | CN | 101981308 A | 23-02-2011 |
|  |  | EP | 2320077 A1 | 11-05-2011 |
|  |  | JP | 5244502 B2 | 24-07-2013 |
|  |  | JP | 2010048239 A | 04-03-2010 |
|  |  | KR | 20100117129 A | 02-11-2010 |
|  |  | TW | 201013045 A | 01-04-2010 |
|  |  | US | 2011018271 A1 | 27-01-2011 |
|  |  | WO | 2010024054 A1 | 04-03-2010 |
| DE 102007027849 A1 | 18-12-2008 | CN | 101802393 A | 11-08-2010 |
|  |  | DE | 102007027849 A1 | 18-12-2008 |
|  |  | DK | 2153061 T3 | 08-10-2012 |
|  |  | EP | 2153061 A2 | 17-02-2010 |
|  |  | ES | 2388320 T3 | 11-10-2012 |
|  |  | US | 2010183440 A1 | 22-07-2010 |
|  |  | WO | 2008151695 A2 | 18-12-2008 |

EPO FORM P0459

For more details about this annex : see Official Journal of the European Patent Office, No. 12/82